# EUROPÄISCHE PATENTANMELDUNG

(11) **EP 1 174 334 A2**
(43) Veröffentlichungstag der Anmeldung: **23.01.2002**
(21) Anmeldenummer: 01112461.7
(22) Anmeldetag: 22.05.2001
(51) Int. Cl.: B62K 1/00, B62M 7/12

(54) **Elektrisches Einrad-Fahrzeug**

(30) Priorität: 02.06.2000 DE 10027466
(71) Anmelder: Hofer, Klaus, Prof. Dr., 33607 Bielefeld (DE)
(72) Erfinder: Hofer, Klaus, Prof. Dr., 33607 Bielefeld (DE)

(57) **Zusammenfassung**

Die Erfindung betrifft ein elektrisches Einrad- Fahrzeug mit einem gabelförmigen Rahmen (A), einem drehend gelagerten Rad (B) und einem Elektromotor (C) mit mechanischem Getriebe (D), einschließlich Antriebselektronik und Regelung (E). Zur Erzielung eines stabilen Betriebs und einer leichten Bedienbarkeit ist erfindungsgemäß vorgesehen, daß die reine Motorregelung des Einradantriebs von einem überlagerten Neigungswinkelregler (K) plus Neigungswinkelsensor (F) geführt wird, der das labile Gleichgewicht des Fahrzeugs in der Art eines inversen Pendels stabilisiert. Durch diese Maßnahme wird einerseits eine stabile Ruhelage des Einrad-Fahrzeugs erreicht und andererseits die Vorwärts- oder Rückwärtsfahrt durch eine leichte Schwerpunktsverlagerung des Benutzers nach vorne oder hinten ohne Bedienelemente möglich Die Querstabilität des Einrad-Fahrzeugs ist über eine ausreichende Breite des Rades sichergestellt.

## Beschreibung

Die Erfindung betrifft ein Einrad-Fahrzeug mit geregeltem Elektroantrieb zur Fortbewegung von Personen. Bei allen bekannten Einrädern erfolgt die stabile Bewegung mit der Muskelkraft und dem Geschick des Benutzers. Es ist nach US 4109741 (Motorized unicycle wheel) bekannt, bei derartigen Fahrzeugen die Querstabilität durch Verbreiterung der Lauffläche des Rades zu verbessern und die Kurvenfahrt durch Anphasen der Außenkanten des Rades zu ermöglichen. Trittflächen dienen darüberhinaus der Kraftübertragung und dem sicheren Stand des Fahrers. Nachteilig bei allen muskelgetriebenen Einrädern ist die nicht vorhandene Längsstabilität des Fahrzeugs in Fahrtrichtung, was die Bedienung erschwert und die Einsatzmöglichkeiten einschränkt.
Ferner sind nach DE 19814521 Einrad-Trieb- und Lenkwerke für Flurförderfahrzeuge bekannt, die allerdings für den Einsatz in Einrad-Fahrzeugen nicht geeignet sind, da weitere Räder an dem Fahrzeug angebracht sein müssen, um eine stabile Lage und einen sicheren Betrieb zu gewährleisten

Der Erfindung liegt die Aufgabenstellung zugrunde, ein Einrad-Fahrzeug mit Elektroantrieb plus geeigneter Regelung auszurüsten, sodass die Längsstabilität des Fahrzeugs ohne zutun des Fahrzeugbenutzers gewährleistet ist.

Erfindungsgemäß ist zur Lösung der Aufgabe vorgesehen, daß das Einrad-Fahrzeug von einem drehzahlvariablen Elektromotor angetrieben wird, der wiederum von einer Neigungswinkelregelung seinen Sollwert für das erforderliche Drehmoment bzw. Drehzahl erhält, sodass die Radachse im stabilen Ruhezustand immer senkrecht unter dem Schwerpunkt der Anordnung steht. Dazu ist ein Neigungswinkelregler vorgesehen, der das labile Gleichgewicht des Einrad-Fahrzeugs in der Art eines inversen Pendels stabilisiert.

Die mit der Erfindung erzielten Vorteile bestehen insbesondere darin, daß die Stabilisierung des Einrad-Fahrzeugs in Fahrtrichtung ein Elektroantrieb plus elektronischer Regelung automatisch und ohne zutun des Fahrers ausführt. Dadurch wird die Benutzung eines Einrad-Fahrzeugs wesentlich vereinfacht und erleichtert. Die besondere Anordnung des Gesamtsystems in einem Gabelrahmen kommt mit einem minimalen Aufwand an Material aus und bringt darüberhinaus Vorteile bei der Fertigung und Montage des Einrad-Fahrzeugs.

In weiterer vorteilhafter Ausgestaltung der Erfindung ist vorgesehen, dass die Kraftübertragung von der Welle des Elektroantriebs auf das anzutreibende Rad mit einem mechanischen Getrieb, wie Kette, Zahnriehmen oder Zahnräder, erfolgt. Dadurch lassen sich große Kräfte an der Lauffläche erzielen, wodurch die Traktionseigenschaften und die Längsstabilität verbessert werden.

Zur weiteren Verbesserung der Lenkfähigkeit ist vorgesehen, dass die Anphasung der Außenkanten des Rades durch eine zusätzliche Gummilagerung unterstützt wird, die bei einer Schwerpunktsverlagerung nach rechts oder links eine Verdrehung der Radachse aus der momentanen Fahrtrichtung zuläßt.

In einer weiteren Ausgestaltung der Erfindung ist vorgesehen, dass die Querstabilität des Einrads durch zwei im Abstand auf der Achse angeordnete Doppelräder verbessert wird und die Lenkfähikeit durch getrennte Antriebsmotoren plus Regelungen erhöht wird.

Zur weiteren Verringerung der Baugröße ist vorgesehen, dass der Elektroantrieb auch innerhalb des Rades als direkter Außenläuferantrieb angeordnet ist und den Einsatz eines mechanischen Getriebes überflüssig macht.

Für den unabhängigen Betrieb des Einrad-Fahrzeugs ist vorgesehen, dass ein elektrischer Energiespeicher oder Energieerzeuger auf dem Fahrzeug vorhanden sind.

In weiterer Ausgestaltung der Erfindung ist vorgesehen, dass zur Gewichtseinsparung und für den Betrieb direkt am Stromnetz, die elektrische Energie über Schleppkabel, oder Schleifkontakte dem Fahrzeug von aussen zugeführt wird.

Für die flexible Verbindung mehrerer Einrad-Fahrzeuge zu einem komplexeren Fahrzeugsysteme ist ein zentraler Verbindungspunkt (G) vorgesehen, der auch eine Haltestange mit Sitzgelegenheit und ein Schirmdach sowie eine Plastikumhüllung zum Schutz vor Witterungseinflüssen aufnehmen kann.

Zur Erhöhung des Fahrkomforts ist im Weiteren vorgesehen, dass. ein Schutzblech Spritzwasser des Rades zurückhält

Die Erfindung wird im Weiteren anhand der Figuren näher erläutert.

Es zeigt:
**Fig.1** die Vorderansicht des erfindungsgemäßen Elektrischen Einrad-Fahrzeugs, bei dem rechts und links der Radachse Trittflächen für den Benutzer angeordnet sind
**Fig. 2** die Seitenansicht des erfindungsgemäßen Elektrischen Einrad-Fahrzeugs, bei dem das Rad von einem Schutzblech abgedeckt ist.
**Fig. 3** den regelungstechnischen Schaltplan zur Stabilisierung des Elektrischen EinrädFahrzeugs in Fahrtrichtung

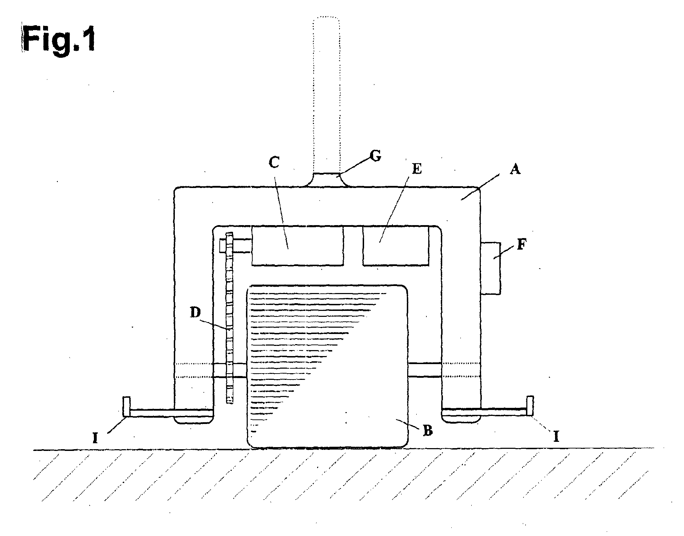

**Fig. 1** zeigt in einer in Fahrtrichtung weisenden Vorderansicht das erfindungsgemäße Elektrische Einrad-Fahrzeug, bei dem in einem gabelförmigen Rahmen (A) das Fahrzeugrad (B) auf einer Welle drehend gelagert angeordnet ist, das über ein mechanisches Getriebe (D), wie Kette, Zahnriehmen oder Zahnräder, von einem Elektroantrieb (C), einschließlich Antriebselektronik und Regelung (E), vorwärts oder rückwärts so angetrieben wird, dass der Gesamtschwerpunkt des Fahrzeugs immer senkrecht über der Radachse gehalten wird. Dazu ist ein Neigungswinkelsensor (F) vorgesehen, der die Abweichung des Schwerpunkts aus der Senkrechten bestimmt und der Regelung als Lageistwert zuführt.
Die Trittflächen (I) dienen dem sicheren Stand des Fahrers und die Haltestange im zentralen Verbindungspunkt (G) ist zum Festhalten und zur Erhöhung des Fahrkomforts durch Anbringen einer Sitzgelegenheit, eines Schirmdachs oder einer Plastikumhüllung, zum Schutz vor Witterungseinflüssen, vorgesehen.

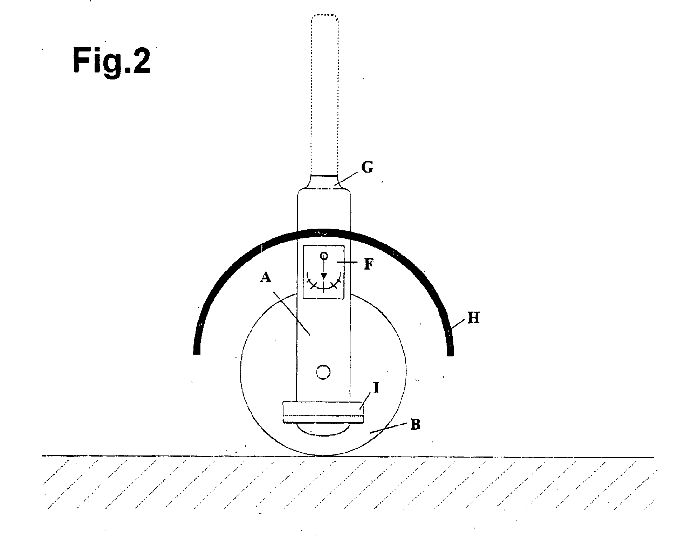

**Fig. 2** zeigt in einer Seitenansicht das erfindungsgemäße Elektrische Einrad-Fahrzeug, bei dem zum Schutz des Fahrers vor Spritzwasser, ein Schutzblech (H) vorgesehen ist. Dargestellt ist die stabile Ruhelage, in der der Neigungswinkelsensor keine Abweichung des Schwerpunkts aus der Senkrechten zur Achse feststellt. Bei einer leichten Schräglage nach rechts oder links, veranlaßt die Neigungswinkelregelung (F) den Elektroantrieb, das Einrad nach rechts oder links zu bewegen, damit der Schwerpunkt wieder unter der Radachse zu stehen kommt. Wegen des labilen Zustands dieser Anordnung, muß die Regelung ständig stabilisierend eingreifen.

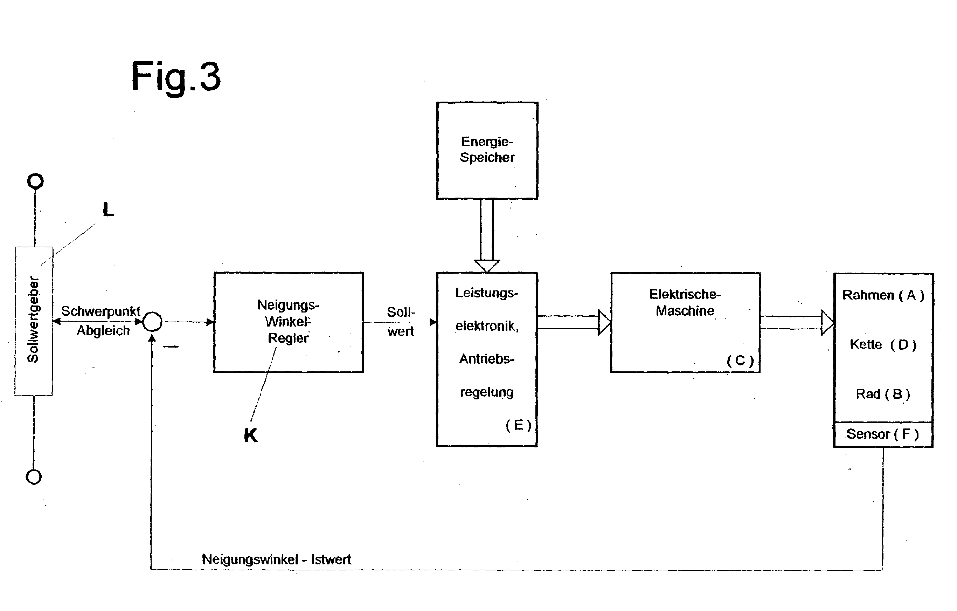

**Fig. 3** zeigt das Regelschema des erfindungsgemäßen Elektrischen Einrad-Eahrzeugs, bei dem die Abweichung des Schwerpunkts aus der Senkrechten, mit einem Neigungswinkelsensor (F) gemessen und einem Neigungswinkelregler (K) als Istwert zugeführt wird. Um Ungenauigkeiten des Sensors abgleichen und Unsymmetrien im Fahrzeugaufbau ausgleichen zu können, wird dem Neigungswinkelregler ein kleiner Abgleichsollwert (L) zugeführt. Aus dem Sollwert und Istwert bestimmt der Neigungswinkelregler den erforderlichen Drehmomentsollwert für die unterlagerte Antriebsregelung (E), die darüberhinaus eine Begrenzung der Motordrehzahl auf zulässige Werte vornimmt.
Der Neigungswinkelregler (K) kann entweder direkt beim Neigungswinkelsensor (F) oder innerhalb der Antriebselektronik (E) angeordnet sein. Für die Regelung des Fahrzeugschwerpunkts in der Art eines inversen Pendels kommen klassische PID-Strategien, Fuzzy-Control, Neuronale Netze oder Kombinationen dieser Regelverfahren in Frage, sodass eine analoge Realisierung mit Operationsverstärkern wie eine digitale Realisierung mit Mikrocontrollern möglich ist.
Bringt der Fahrzeugbenutzer durch Gewichtsverlagerung den Schwerpunkt des Einrad-Fahrzeugs etwas aus der Ruhelage, setzt es sich automatisch in Bewegung, um die Regelabweichung auszugleichen. Über diese Verlagerung des Schwerpunkts nach vorne oder hinten findet auch die Bedienung des Fahrzeugs durch den Fahrer statt, weshalb keine Bedienelemente, wie Schalter, Taster, Potentiometer oder Joystick, erforderlich sind.

### Bezugszeichenliste

- A: Rahmengabel
- B: Rad
- C: Elektroantrieb
- D: Kette oder Zahnriemen
- E: Leistungselektronik plus Antriebsregelung
- F: Neigungswinkelsensor
- G: Zentraler Verbindungspunkt
- H: Schutzblech
- I: Trittflächen
- K: Neigungswinkelregler
- L: Sollwert für Sensorabgleich

## Patentansprüche

1. Elektrisches Einrad-Fahrzeug, bei dem zur Kraftübertragung vom Fahrzeug (A) auf das Rad (B) ein Elektromotor (C) mit Drehmomentenwandler (D) verwendet ist, der über eine Antriebselektronik (E) an einen elektrischen Energiespeicher angeschlossen ist, und Trittflächen (I) für den sicheren Stand einer Person aufweist, **dadurch gekennzeinet**, daß der Elektroantrieb von einer überlagerten Neigungswinkelregelung mit Neigungswinkelsensor (F) geführt ist.

2. Elektrisches Einrad-Fahrzeug nach Anspruch 1, **dadurch gekennzeichnet, daß** der Neigungswinkelregler (K) für die Stabilisierung eines inversen Pendels ausgeführt ist.

3. Elektrisches Einrad-Fahrzeug nach Anspruch 1, **dadurch gekennzeichnet, daß** für den Fahrbetrieb kein Bedienelement erforderlich ist.

4. Elektrisches Einrad-Fahrzeug nach Anspruch 1, **dadurch gekennzeichnet, daß** ein zentraler Verbindungspunkt (G) für zusätzliche Aufbauten und die Realisierung erweiterter Fahrsysteme vorhanden ist.
